# EUROPÄISCHE PATENTSCHRIFT

(11) **EP 1 363 827 B1**
(45) Veröffentlichungstag und Bekanntmachung des Hinweises auf die Patenterteilung: **30.11.2005**
(21) Anmeldenummer: 02714148.0
(22) Anmeldetag: 07.02.2002
(51) Int. Cl.: B62D 25/06, B21D 26/02

(54) **HINTERER DACHRAHMEN VON KRAFTAHRZEUGEN**
REAR ROOF FRAME FOR MOTOR VEHICLES
CADRE ARRIERE DE TOIT POUR AUTOMOBILES

(30) Priorität: 02.03.2001 DE 10110055
(43) Veröffentlichungstag der Anmeldung: 26.11.2003
(73) Patentinhaber: DaimlerChrysler AG, 70567 Stuttgart (DE)
(72) Erfinder: EIPPER, Konrad, 72108 Rottenburg (DE); KOSLOWSKI, Heinz, 70839 Gerlingen (DE); LOHSE, Thomas, 21358 Mechtersen (DE); SAILER, Thomas, 72555 Metzingen (DE); SCHROEDER, Matthias, 21720 Grünendeich (DE); WENDLER, Richard, 71034 Böblingen (DE)
(86) Internationale Anmeldenummer: PCT/EP2002/001267
(87) Internationale Veröffentlichungsnummer: WO 2002/070325

(56) Entgegenhaltungen:
- WO-A-99/11504
- DE-A- 10 001 989
- DE-A- 10 014 367
- DE-A- 10 034 141

## Beschreibung

Die Erfindung betrifft einen hinteren Dachrahmen von Kraftfahrzeugen.

Bei herkömmlichen Serienkraftfahrzeugen, insbesondere bei sogenannten Kombinationsfahrzeugen, besteht der hintere Dachrahmen aus einer Vielzahl von einzelnen Blechpreßteilen, die zu einer Innenschale und einer Außenschale gefügt sind, welche ihrerseits unter Bildung eines Hohlraumes zu einem Hohlprofil gefügt, insbesondere verschweißt sind. Die Stützvorrichtung für die am Dachrahmen angeschlagene und nach oben schwenkbare Heckklappe wird von Scharnieren gebildet, die einenends am hinteren Dachrahmen befestigt sind. Zusätzlich wird die Heckklappe noch durch Gasfedern abgestützt, die einerseits am Heckpfosten der Karosserie und andererseits an der Heckklappe unmittelbar angelenkt sind. Diese Schalen müssen, um die Dichtigkeit der Karosserie besonders im Eckbereich beim Übergang des hinteren Dachrahmens in den nach hinten im Rohbauzustand offenen seitlichen Dachrahmen zu gewährleisten, in aufwendiger und sorgfältiger Weise in den Flanschbereichen nach außen abgedichtet werden, was häufig umweltunverträgliche Dichtstoffe erfordert. Weiterhin entstehen aufgrund der Mehrteiligkeit und der verzugbehafteten Schweißverbindungen Toleranzprobleme, die auch hinsichtlich des Anschlusses des hinteren Dachrahmens an den seitlichen Dachrahmen die Abdichtungsmöglichkeit behindern und ein aufwendiges Richten des Dachrahmens zur Folge haben können.

Durch die offene Gestaltung des hinteren Dachrahmens in den Eckbereichen zum seitlichen Dachrahmen hin ist die Steifigkeit in Torsions- und Biegerichtung erniedrigt, was im Fahrbetrieb und beim Aufschlagen der Heckkklappe zu Verzügen des Rahmens oder aber nach längerer Betriebszeit des Kraftfahrzeuges zu Beschädigungen durch Einfallstellen am Rahmen führen kann. Um dem zu entgegnen, können in den Eckbereichen des hinteren Dachrahmens für die Gewährleistung eines Langzeitbetriebes des Fahrzeugs eine Vielzahl an zusätzlich angebrachten Versteifungsblechen angebracht werden, was zu einem vergrößerten Aufwand in der Montage und zu einem erhöhten Gewicht führt.

Der Erfindung liegt die Aufgabe zugrunde, einen hinteren Dachrahmen eines Kraftfahrzeuges mit einer am Dachrahmen angeschlagenen Heckklappe aufzuzeigen, der trotz Schalenbauweise in einfacher Weise und Leichtbauweise eine für die Haltbarkeit gegenüber hohen mechanischen Beanspruchungen ausreichende Torsions- und Biegesteifigkeit aufbringt.

Die Aufgabe ist erfindungsgemäß durch die Merkmale des Patentanspruches 1 gelöst.

Dank der Erfindung entfällt eine komplizierte Schalenstruktur mit Versteifungsblechen, da sich die Schalenbauweise nur auf zwei Schalen, eine Oberschale und eine Unterschale, beschränkt. Aufgrund dessen, daß im Übergangsbereich des hinteren Dachrahmens zum seitlichen Dachrahmen in der Schalenstruktur Hohlprofile mit einem knieförmigen Abschnitt beidseitig angeordnet und an der Struktur befestigt sind, erhält der hintere Dachrahmen eine außerordentliche Biege- und Torsionssteifigkeit quer und längs zur Fahrzeugrichtung, wobei sich diese besonders auf die Anbringungsstelle des Scharnieres der Heckklappe konzentriert, so daß in der erfindungsgemäßen Dachrahmengestaltung keine Schäden des Rahmens bei häufiger Schwenkbetätigung der Heckklappe und sonstiger mechanischer Beanspruchungen des Fahrzeugs während des Fahrbetriebes, die sich unter anderem auch auf den hinteren Dachrahmen in Form von Verzügen auswirken, auftreten. Hohlprofile sind einfach herzustellen und dank ihrer hohen Steifigkeitseigenschaften gegenüber anderen in herkömmlicher Weise versteifenden Blechkonstruktionen von Schalenbauweisen bei vergleichbaren Steifigkeitswerten von geringem Gewicht. Aufgrund der engen Anknüpfung seitlichen Dachrahmens an den hinteren Dachrahmen in Form eines Hohlprofiles, das das Ende des hinteren Dachrahmens bildet, wird eine optimale Krafteinleitung und - verteilung im gesamten Dachrahmen erzielt, wobei diese Anknüpfung einen weiteren wesentlichen Beitrag zur Versteifung des hinteren Dachrahmens erbringt. Der mittlere Teil des hinteren Dachrahmens, der keine sonderliche Aussteifung benötigt, bleibt im Vergleich zum übrigen Dachrahmen biegeschlaff.

Aufgrund dessen, daß der Endbereich des hinteren und des seitlichen Dachrahmens, der im Rohbauzustand nach hinten teilweise offen ist und somit bezüglich der Steifigkeit geschwächt ist, von Hohlprofilen, insbesondere im Übergang zum seitlichen Dachrahmen von einem einstückigen umfänglich geschlossenen Hohlprofil gebildet wird, wird die Schwächung in einfacher Weise überkompensiert, was besonders bei einem Seitenaufprall und Überschlägen des Kraftfahrzeuges durch die ernergieabsorbierende Wirkung von erheblichem Vorteil ist. Schweißflansche sind für die Herstellung nicht mehr zwangsläufig notwendig und für die Betrachtung der Dichtigkeit von keiner Bedeutung mehr. Das erfindungsgemäße Hohlprofil läßt durch das Fehlen von Spalten und Schweißflanschen keine Dichtigkeitsprobleme aufkommen, wobei die Fertigung mit wesentlich geringeren Toleranzen erfolgen kann als bei einem mehrteiligen Schalenbau. In Anbetracht seiner sehr hohen Steifigkeit kann bei unerheblicher Verringerung der Steifigkeit die Wandstärke reduziert werden, was Bauraum und Gewicht einspart. In vorteilhafter Weise hinsichtlich einer bauraumsparenden und geschützten Unterbringungsmöglichkeit bildet das Hohlprofil ein Aufnahmegehäuse, in dem das Scharnier und/oder die Gasdruckfeder angebracht ist. Die Hohlprofile können als Rohling beispielsweise als zweischalige Struktur ausgebildet sein. Alternativ sind Strangpreßprofile, oder gezogene Rohre denkbar. Ebenfalls können die Hohlprofile aus einer Platine geschnitten und nach einer anschließenden Biege- oder Rolloperation längsnahtgeschweißt sein.

Des weiteren wird die Teilevielfalt zur Herstellung des hinteren Dachrahmens und somit des gesamten Dachrahmens reduziert, was einen geringen Herstellung und Montageaufwand sowie eine Verringerung der Herstellungskosten bedeutet.

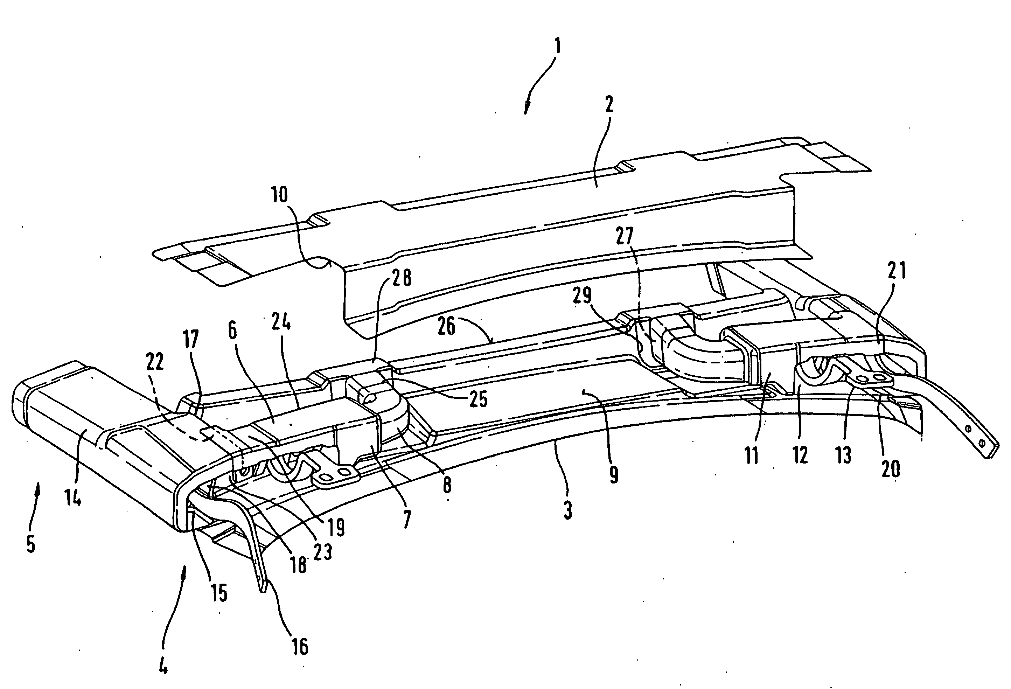

Weitere zweckmäßige Ausgestaltungen der Erfindung können den Unteransprüchen entnommen werden; im übrigen ist die Erfindung anhand eines in der Zeichnung dargestellten Ausführungsbeispieles nachfolgend näher erläutert; dabei zeigt die Figur in einer perspektivischen Darstellung einen erfindungsgemäßen hinteren Dachrahmen mit einem Hohlprofilzusammenbau des seitlichen Dachrahmens im Endbereich des hinteren Dachrahmens.

In der Figur ist ein hinterer Dachrahmen 1 eines Kraftfahrzeuges mit einer Heckklappe, die am Dachrahmen 1 angeschlagen ist, dargestellt. Der hintere Dachrahmen 1 besteht aus einer Oberschale 2 und einer an dieser gefügten Unterschale 3. Das Fügen der Schalen 2 und 3 kann entweder unlösbar durch Verschweißen, Kleben oder Durchsetzfügen oder auch lösbar mittels Verbindungelementen wie Schrauben o.ä. erfolgen. Innerhalb der Schalenstruktur ist ein jeweils vom Übergangsbereich 4 zum seitlichen Dachrahmen 5 ausgehendes Hohlprofil 6 angeordnet ist, das parallel zur Längserstreckung der Struktur verläuft. Das geradlinige Hohlprofil 6, das sowohl einstückig als auch als Schalenkonstruktion gefertigt sein kann, ist mit seinem dem seitlichen Dachrahmen 5 abgewandten Ende 7 unmittelbar mit einem weiteren knieförmigen Hohlprofil 8 verbunden, das in Bugrichtung des Fahrzeuges abknickt.

Obwohl es denkbar ist, daß in fertigungstechnisch einfacher Weise die beiden Hohlprofile 6 und 8 einstückig miteinander verbunden sind, erbringt die gezeigte Zweiteiligkeit eine bessere Austauschbarkeit der einzelnen Bauteile und eine höhere Eignung in der spezifischen Anpassung an den Bauraum. Bei einer Wahl der Variante der Einteiligkeit kann das Hohlprofil 6,8 aus einem geradlinigen Rohr gebogen werden, welches dann in einem Werkzeug bezüglich des Querschnittes in Form und Durchmesser vorprofiliert und anschließend durch Innenhochdruckumformen in die Endform mit der gewünschten Profilkontur toleranzfrei gebracht wird. Bei dieser Variante läuft dann das Hohlprofil 6 einstückig in dem Knie 8 aus. Das Hohlprofil 6 und das Knie 8 kann an der Oberseite 9 der Unterschale 3 und der Unterseite 10 der Schale 2 oder an nur einer der beiden Schalen 2,3 lösbar oder unlösbar befestigt sein. Die nach hinten weisende Stirnseite 11 des Hohlprofiles 6 oder - im Falle der einstückigen Verbindung mit dem Knie 8 - seines sich längs der Schalenstruktur (Oberschale 3 und Unterschale 3) erstreckenden Abschnittes eine horizontal verlaufende schlitzartige Öffnung 12 aufweist, die ein im Hohlprofil 6 an dessen Innenseite 23 der hinteren Profilstirnseite 24 schraubbefestigtes Heckklappenscharnier 13 durchragt.

Das jeweilige Ende des hinteren Dachrahmens 1 bildet ein rohrförmiges Hohlprofil 14 des seitlichen Dachrahmens 5, das an das Hohlprofil 6 des hinteren Dachrahmens 1 angeschlossen ist. Das Hohlprofil 14 kann ein Innenhochdruckumformteil sein, wodurch die fertigungs- und montagetoleranzbehafteten Blechkonstruktionen entfallen und den gerade im Übergangsbereich 4 anfallenden hohen Dichtigkeitsansprüchen vollauf Genüge tun. In fertigungstechnisch günstiger Weise können das Hohlprofil 14, das Hohlprofil 6 und das Knie 8 einstückig verbunden sein, wobei ein einfaches gerades Rohr das Halbzeug bildet, das zuerst in U-form gebogen wird und dann in einem Innenhochdruckumformwerkzeug gequetscht und vorprofiliert wird. Anschließend wird das Bauteil durch fluidischen Innenhochdruck bezüglich Querschnitt, Form und Kontur bedarfsgerecht aufgeweitet, wonach im Übergangsbereich 4 die Öffnung 12 und eine Öffnung 15 am hinteren Ende des das Hohlprofil 14 bildenden Abschnittes zur Aufnahme und Montage einer Gasdruckfeder 16 als Abstützvorrichtung für die Heckklappe beispielsweise durch Laserkonturschneiden herausgeschnitten werden.

Im vorliegenden Ausführungsbeispiel sind die Hohlprofile 14, 6 und 8 jedoch separate aneinander gefügte Bauteile. Das Hohlprofil 14 des seitlichen Dachrahmens 5 weist auf seiner dem Hohlprofil 6 zugewandten Seite 17 in verbindungstechnisch günstiger Weise eine Ausklinkung 18 auf, in die das Hohlprofil 6 des hinteren Dachrahmens 1 mit seinem zugewandten Ende 19 eingreift, wobei die Ränder 20 der Ausklinkung 18 von dem Hohlprofil 6 umgriffen werden. Das Hohlprofil 6 ist dazu endseitig aufgestülpt, so daß sich ein schweißflanschartiger Bereich 21 über den gesamten Umfang des Hohlprofilendes 19 ausbildet, welcher beim Umgreifen der Ausklinkungsränder 20 eine Überlappungszone 22 schafft, in der die beiden Hohlprofile 6 und 14 in leicht zu handhabender Weise verschweißt, vorzugsweise punktgeschweißt werden können. Zur sicheren Abdichtung werden die Hohlprofile 6 und 14 dort noch verklebt, wobei der Klebevorgang nach dem Schweißen erfolgt. Der Klebstoff wird auf das Hohlprofil 14 unmittelbar neben dem Ende des umgreifenden und bereits verschweißten Hohlprofiles 6 aufgetragen, wonach der noch flüssige Klebstoff durch einen Kapillareneffekt des Fügespaltes zwischen den Hohlprofilen 6 und 14 in die Überlappungszone 22 breitflächig hineingezogen wird und dann aushärten kann.

Die Schwächung des Hohlprofiles 14 durch die Ausklinkung 18 hinsichtlich der Steifigkeit an dieser Stelle wird durch die geschilderte rechtwinklige Anbindung an das Hohlprofil 6 des hinteren Dachrahmens 1 mehr als kompensiert. Außerdem werden von außen einwirkende Kräfte wie beim Seitenaufprall durch die großflächige Einleitung in den hinteren Dachrahmen 1 sehr gut auf den übrigen Dachrahmen übertragen, so daß eine hohe Stoßfestigkeit erreicht wird. Alternativ kann das Hohlprofil 14 seitlich geschlossen sein, wodurch die Innenräume der Hohlprofile 6 und 14 voneinander getrennt sind. Hierbei muß das zugewandte Ende des Hohlprofiles 6 mit Schweiß- bzw. Klebeflanschen ausgebildet sein, so daß eine sichere Anbindung gewährleistet ist. Zu diesem Zwecke kann die Umfangsfläche des Hohlprofiles 14 an der entsprechenden Fügestelle durch Innenhochdruckumformen an die Kontur der Schweißflansche angepaßt oder für eine möglichst günstige Handhabung des Fügeverfahrens geeignet ausgeformt sein.

Weiterhin ist der Figur entnehmbar, daß das Knie 8 mit seinem in Bugrichtung des Fahrzeuges weisenden Ende 25 an der Längsseite 26 der Schalenstruktur befestigt ist, womit eine weitere Steifigkeitserhöhung für den hinteren Dachrahmen 1 im Übergangsbereich 4 zum seitlichen Dachrahmen 5 geschaffen wird. Diese Anbindung an die Schalenstruktur bildet mit dem Hohlprofil 14, dem Hohlprofil 6 und dem Knie 8 eine Art rechteckiger Steifigkeitsknoten mit hochsteifen Eigenschaften in allen Raumrichtungen, was neben der eminenten mechanischen Belastungsfähigkeit für ganz außerordentliche Energieabsorptionsfähigkeiten des hinteren Dachrahmens im Falle eines Fahrzeugcrashes sorgt.

Das hohle Knie 8 weist an seinem Ende 25 eine Öffnung 27 auf, die mit einer Öffnung in der Unterschale 3 der Schalenstruktur an deren Längsseite 26 fluchtet. Das Ende 25 besitzt einen ringbundartigen Flansch 28, der oberseitig in Fahrzeugbugrichtung abgeklappt ist und in eine die vorgenannte Öffnung beinhaltende U-förmige Aussparung 29 der Unterschale 3 eingepaßt und dort an dieser befestigt ist. Der Verwendungszweck der Öffnungen in der Unterschale 3 und der Öffnung 27 besteht darin, daß damit und durch das Knie 8 und das Hohlprofil 6 in einfacher Weise mit bestmöglicher Abdichtung nach außen ein Kabelkanal für Rückleuchte, Heckheizung, Scheibenwischer, Zentralverriegelung, Zuziehhilfe usw. mit guter Führung für die Kabel ausgebildet ist.

## Patentansprüche

1. Hinterer Dachrahmen (1) eines Kraftfahrzeuges mit einer Heckklappe, die am Dachrahmen (1) angeschlagen ist, wobei der hintere Dachrahmen (1) aus einer Oberschale (2) und einer an dieser gefügten Unterschale (3) besteht, wobei innerhalb der Schalenstruktur ein jeweils vom Übergangsbereich (4) zum seitlichen Dachrahmen (5) ausgehendes Hohlprofil (6) angeordnet ist, das parallel zur Längserstreckung der Struktur verläuft und zumindest an dem seitlichen Dachrahmen (5) abgewandten Ende (7) in einem in Bugrichtung des Fahrzeuges abknickenden Knie (8) ausläuft und an seiner nach hinten weisenden Stirnseite (11) des sich längserstreckenden Abschnittes eine Öffnung (12) aufweist, die ein im Hohlprofil (6) befestigtes Heckklappenscharnier (13) durchragt, und wobei das Ende des hinteren Dachrahmens (1) ein rohrförmiges Hohlprofil (14) des seitlichen Dachrahmens (5) bildet, das an das Hohlprofil (6) des hinteren Dachrahmens (1) angeschlossen ist.

2. Dachrahmen nach Anspruch 1,
**dadurch gekennzeichnet,**
**daß** das Hohlprofil (6) in ein geradlinig verlaufendes Bauteil und in ein mit diesem verbundenes Knie (8) geteilt ist.

3. Dachrahmen nach Anspruch 1,
**dadurch gekennzeichnet,**
**daß** die Hohlprofile (6,14) des seitlichen und des hinteren Dachrahmens (5,1) einstückig miteinander verbunden sind.

4. Dachrahmen nach einem der Ansprüche 1 bis 3,
**dadurch gekennzeichnet,**
**daß** das Hohlprofil (6,14) des seitlichen und/oder des hinteren Dachrahmens (5,1) innenhochdruckumgeformte Bauteile sind.

5. Dachrahmen nach einem der Ansprüche 1 bis 4,
**dadurch gekennzeichnet,**
**daß** im Hohlprofil (14) des seitlichen Dachrahmens (5) eine Gasdruckfeder (16) als Abstützvorrichtung für die Heckklappe angeordnet ist.

6. Dachrahmen nach einem der Ansprüche 1 bis 5,
**dadurch gekennzeichnet,**
**daß** das Knie (8) mit seinem in Bugrichtung des Fahrzeuges weisenden Ende (25) an der Längsseite (26) der Schalenstruktur befestigt ist, und daß die Schalenstruktur eine Öffnung aufweist, die mit der Öffnung (27) des hohlen Knies (8) fluchtet.

7. Dachrahmen nach einem der Ansprüche 1,2, oder 4 bis 6,
**dadurch gekennzeichnet,**
**daß** das Hohlprofil (14) des seitlichen Dachrahmens (5) auf der dem Hohlprofil (6) zugewandten Seite (17) eine Ausklinkung (18) aufweist, deren Ränder (20) von ausklinkungsfreien Hohlprofil (6) überlappend umgriffen sind, und daß die Hohlprofile (6,14) in ihrer Überlappungszone (22) miteinander verschweißt und/oder verklebt sind.

## Claims

1. Rear roof frame (1) of a motor vehicle, having a tailgate which is set into the roof frame (1), the rear roof frame (1) comprising an upper shell (2) and a lower shell (3) which is fitted to the latter, a hollow profile (6) which leads in each case from the transition region (4) to the lateral roof frame (5) being arranged within the shell structure and running parallel to the longitudinal extent of the structure and emerging, at least at the end (7) which faces away from the lateral roof frame (5), in a knee (8) which kinks in the front-end direction of the vehicle, and, on its rearwardly pointing end side (11) of the longitudinally extending section, has an opening (12) which protrudes through a tailgate hinge (13), which is fastened in the hollow profile (6), and the end of the rear roof frame (1) forming a tubular hollow profile (14) of the lateral roof frame (5), which is connected to the hollow profile (6) of the rear roof frame (1).

2. Roof frame according to Claim 1, **characterized in that** the hollow profile (6) is divided into a component which runs rectilinearly and into a knee (8) which is connected to the latter.

3. Roof frame according to Claim 1, **characterized in that** the hollow profiles (6, 14) of the lateral and of the rear roof frame (5, 1) are connected integrally to each other.

4. Roof frame according to one of Claims 1 to 3, **characterized in that** the hollow profile (6, 14) of the lateral and/or of the rear roof frame (5, 1) are components formed by internal high pressure.

5. Roof frame according to one of Claims 1 to 4, **characterized in that** a gas-filled compression spring (16) is arranged in the hollow profile (14) of the lateral roof frame (5) as a supporting device for the tailgate.

6. Roof frame according to one of Claims 1 to 5, **characterized in that** the knee (8) is fastened with its end (25) pointing in the front-end direction of the vehicle to the longitudinal side (26) of the shell structure, and **in that** the shell structure has an opening which is aligned with the opening (27) of the hollow knee (8).

7. Roof frame according to one of Claims 1, 2, or 4 to 6, **characterized in that** the hollow profile (14) of the lateral roof frame (5) has, on the side (17) which faces the hollow profile (6), a notch (18), the edges (20) of which are encompassed in an overlapping manner by a notch-free hollow profile (6), and **in that** the hollow profiles (6, 14) are welded and/or bonded to each other in their overlapping zone (22).

## Revendications

1. Cadre arrière de toit (1) d'un véhicule automobile doté d'un hayon qui est cloué au cadre de toit (1), le cadre arrière de toit (1) étant constitué d'une coque supérieure (2) et d'une coque inférieure (3) jointe à celle-ci, un profilé creux (6) partant respectivement d'une zone de transition (4) vers un cadre latéral de toit (5) étant disposé à l'intérieur de la structure en coque, lequel profilé s'étend parallèlement à l'extension longitudinale de la structure et termine au moins sur une extrémité (7) opposée au cadre latéral de toit (5) dans un tube coudé (8) se pliant dans la direction avant du véhicule et comprend sur son côté frontal (11), orienté vers l'arrière de la section s'étendant longitudinalement, un orifice (12) qui traverse une charnière de hayon (13) fixée dans le profilé creux (6), et l'extrémité du cadre arrière de toit (1) formant un profilé creux tubulaire (14) du cadre latéral de toit (5), qui est raccordé au profilé creux (6) du cadre arrière de toit (1).

2. Cadre de toit selon la revendication 1, **caractérisé en ce que** le profilé creux (6) est divisé en un composant s'étendant de façon rectiligne et en un tube coudé (8) relié à celui-ci.

3. Cadre de toit selon la revendication 1, **caractérisé en ce que** les profilés creux (6, 14) des cadres latéral et arrière de toit (5, 1) sont reliés l'un à l'autre en une seule pièce.

4. Cadre de toit selon l'une quelconque des revendications 1 à 3, **caractérisé en ce que** les profilés creux (6, 14) des cadres latéral et/ou arrière de toit (5, 1) sont des composants formés sous haute pression interne.

5. Cadre de toit selon l'une quelconque des revendications 1 à 4, **caractérisé en ce qu'**un ressort à gaz comprimé (16) est disposé à titre de dispositif d'appui pour le hayon dans le profilé creux (14) du cadre latéral de toit (5).

6. Cadre de toit selon l'une quelconque des revendications 1 à 5, **caractérisé en ce que** le tube coudé (8) est fixé avec son extrémité (25) orientée dans la direction avant du véhicule sur un côté longitudinal (26) de la structure à coque, et **en ce que** la structure à coque comprend un orifice qui est aligné sur un orifice (27) du tube coudé creux (8).

7. Cadre de toit selon l'une quelconque des revendications 1, 2 ou 4 à 6, **caractérisé en ce que** le profilé creux (14) du cadre latéral de toit (5) comprend sur le côté (17) tourné vers le profilé creux (6) une encoche (18) dont les bords (20) sont entourés en étant chevauchés par le profilé creux (6) exempt d'encoches, et **en ce que** les profilés creux (6, 14) sont soudés et/ou collés l'un à l'autre dans leur zone de chevauchement (22).
